# EUROPÄISCHE PATENTANMELDUNG

(11) **EP 3 572 292 A1**
(43) Veröffentlichungstag der Anmeldung: **27.11.2019**
(21) Anmeldenummer: 19164205.7
(22) Anmeldetag: 21.03.2019
(51) Int. Cl.: B60W 30/095, G08B 25/01, G08B 21/04, G08B 25/00, G08G 1/00, B60R 21/0132

(54) **VERFAHREN UND VORRICHTUNG ZUR ERZEUGUNG EINER KLASSIFIZIERUNG EINER UNFALLSITUATION**

(30) Priorität: 26.05.2018 DE 102018208331
(71) Anmelder: Robert Bosch GmbH, 70442 Stuttgart (DE)
(72) Erfinder: Stegmaier, Juergen, 72827 Wannweil (DE); Greiner, Rinaldo, 72762 Reutlingen (DE); Schnee, Jan, 71093 Weil Im Schoenbuch (DE)

(57) **Zusammenfassung**

Die Erfindung geht aus von einem Verfahren beziehungsweise einer Vorrichtung zur Erkennung einer Unfallsituation eines Verkehrsteilnehmers. Diese Unfallsituation wird dabei mittels der Erfassung einer ersten Sensorgröße eines ersten Sensors erkannt. Hierbei kann es sich beispielsweise um eine Beschleunigungsgröße handeln, deren Komponenten vorzugsweise in wenigstens zwei Raumrichtungen erfasst und ausgewertet werden. Es ist jedoch auch denkbar, als erste Sensorgröße eine Drehrate zu erfassen. Der Kern der Erfindung besteht dabei darin, dass eine weitere Sensorgröße in Form einer Magnetfeldsensorgröße erfasst wird, mittels der die Annäherung eines magnetischen Objekts, z.B. eines Kraftfahrzeugs, detektiert werden kann. In Abhängigkeit dieser Magnetfeldsensorgröße kann in Verbindung mit der zuvor erkannten Unfallsituation eine Klassifizierung des Unfalls vorgenommen werden, die die Information enthält, ob ein Kraftfahrzeug bei dem Unfall involviert ist oder nicht. Da der Verkehrsteilnehme, z.B. ein Zweiradfahrer aber auch ein Fußgänger, in solchen Fällen mit einer höheren Wahrscheinlichkeit eine schwere Verletzung davongetragen hat, ist es von Vorteil, diese Information vorliegen zu haben.

## Beschreibung

Die Erfindung beschreibt ein Verfahren und eine Vorrichtung, die eine Unfallsituation in wenigstens zwei Klassen einteilt sowie ein Zweirad mit einer derartigen Vorrichtung.

### Stand der Technik

Zweiradfahrer sind im Straßenverkehr besonders gefährdet, da sie auf dem Zweirad gegenüber den Kraftfahrzeugen ungeschützter sind. Daher tragen Zweiradfahrer bei Unfälle öfters mehr oder weniger schwere Verletzungen davon, insbesondere in Verbindung mit Kraftfahrzeugen.

Um in solchen Fällen für den Zweiradfahrer schnell eine Hilfe zu rufen, sind verschiedene Notrufsysteme bekannt, die in Abhängigkeit von Sensorsignalen erkennen, ob ein Unfall stattgefunden hat. Weiterhin ist beispielsweise aus der DE 10 2014 227 045 A1 bzw. der DE 10 2006 031 240 A1 bekannt, die Verletzungsschwere des Fahrers und/oder eines Fußgängers zu beurteilen, um darauf basierend einen Notruf abzusetzen.

Mit der vorliegenden Erfindung soll eine weitere Möglichkeit beschrieben werden, die Unfallsituation zu bewerten, um darauf basierend die Notwendigkeit zur Absetzung eines Notrufs zu erkennen.

### Offenbarung der Erfindung

Die Erfindung geht aus von einem Verfahren beziehungsweise einer Vorrichtung zur Erkennung einer Unfallsituation eines Verkehrsteilnehmers.

Diese Unfallsituation wird dabei mittels der Erfassung einer ersten Sensorgröße eines ersten Sensors erkannt. Hierbei kann es sich beispielsweise um eine Beschleunigungsgröße handeln, deren Komponenten vorzugsweise in wenigstens zwei Raumrichtungen erfasst und ausgewertet werden. Es ist jedoch auch denkbar, als erste Sensorgröße eine Drehrate zu erfassen. Der Kern der Erfindung besteht dabei darin, dass eine weitere Sensorgröße in Form einer Magnetfeldsensorgröße erfasst wird, mittels der die Annäherung eines magnetischen Objekts, z.B. eines Kraftfahrzeugs, detektiert werden kann. In Abhängigkeit dieser Magnetfeldsensorgröße kann in Verbindung mit der zuvor erkannten Unfallsituation eine Klassifizierung des Unfalls vorgenommen werden, die die Information enthält, ob ein Kraftfahrzeug bei dem Unfall involviert ist oder nicht. Da der Verkehrsteilnehmer, z.B. ein Zweiradfahrer aber auch ein Fußgänger, in solchen Fällen mit einer höheren Wahrscheinlichkeit eine schwere Verletzung davongetragen hat, ist es von Vorteil, diese Information vorliegen zu haben. Darüber hinaus kann mit der vorgenommenen Klassifizierung auch die Art des Unfalls erfasst werden, z.B. indem weitere Sensorgrößen berücksichtigt werden. Durch die Erfassung der Unfallart und ggf. der Weiterleitung an eine Rettungsstelle können die Hilfskräfte nicht nur über die Eilbedürftigkeit sondern auch über die Form der Hilfe rechtzeitig informiert werden, um schnell die richtige Unterstützung zu liefern.

In einer Weiterbildung der Erfindung kann in Abhängigkeit dieser Klassifizierungsinformation ein Notruf abgesetzt werden oder nicht. So ist denkbar, dass der Notruf nur bei einer Annäherung eines anderen Fahrzeugs abgesetzt wird, während bei keinerlei Beteiligung eines Fremdfahrzeugs der Notruf unterbleibt. Hierbei kann zur Auslösung des Notrufs beispielsweise überprüft werden, ob sich die erfasste Magnetfeldsensorgröße in wenigstens einer Raumrichtung über einen vorgegebenen Schwellenwert hinaus erhöht hat. Optional oder alternativ kann auch geprüft werden, ob die Änderungsgeschwindigkeit, d.h. der Gradient der Magnetfeldänderung einen vorgegebenen Schwellenwert erhöht. Dies würde nahelegen, dass sich das Fremdfahrzeug mit schneller Geschwindigkeit genähert hat, so dass eine schwerere Verletzung zu erwarten ist.

Zusätzlich kann vorgesehen sein, dass eine zweite Sensorgröße eines zweiten Sensors, insbesondere eines weiteren Sensortyps, erfasst wird, anhand der die Unfallsituation erkannt bzw. verifiziert wird. Alternativ oder zusätzlich kann diese zweite Sensorgröße auch dazu verwendet werden, die Klassifizierungsinformation und somit die Schwere des Unfalls abzuleiten. Diese zweite Sensorgröße kann eine Neigungsgröße darstellen, die mittels eines geeigneten Sensors erfasst werden kann. Hierdurch kann beispielsweise eine Verkippung eines Zweirads zur Seite oder auch ein Überschlag erkannt werden. Diese Neigungsgröße kann jedoch auch bei einem Fußgänger verwendet werden, um ein Umfallen zu registrieren. Hierzu ist besonders vorteilhaft, wenn die Neigungsgröße Komponenten in wenigstens zwei Raumrichtungen aufweist.

Generell kann jede Art von Sensorgröße zur Erkennung der Unfallsituation verwendet werden. Hierbei können auch mehrere unterschiedliche physikalische Sensorgrößen miteinander verknüpft werden. So sind neben Beschleunigungsgrößen und Drehratengrößen auch Geschwindigkeitsgrößen oder Kraftgrößen denkbar. Besonders vorteilhaft ist es, wenn die Sensorgrößen richtungsabhängig erfasst und ausgewertet werden. Hierbei sollten wenigstens zwei Raumrichtungen erfasst werden, um die Bewegung des Verkehrsteilnehmers im Raum abzubilden.

Sowohl zur Erkennung der Unfallsituation als auch der Erzeugung der Klassifizierungsinformation kann neben dem absoluten Wert der entsprechenden Sensorgröße auch deren Gradient, d.h. deren Änderungsgeschwindigkeit verwendet werden.

Zum Absetzen eines Notrufs ist wenigstens ein Sender vorgesehen, der in der Vorrichtung zur Erkennung der Unfallsituation bzw. zur Ableitung der Klassifizierungsinformation untergebracht sein kann. Alternativ kann dieser Sender auch an einem mit der erfindungsgemäßen Vorrichtung ausgestattetem Zweirad angebracht sein.

Weitere Vorteile ergeben sich aus der nachfolgenden Beschreibung von Ausführungsbeispielen bzw. aus den abhängigen Patentansprüchen.

### Kurze Beschreibung der Zeichnungen

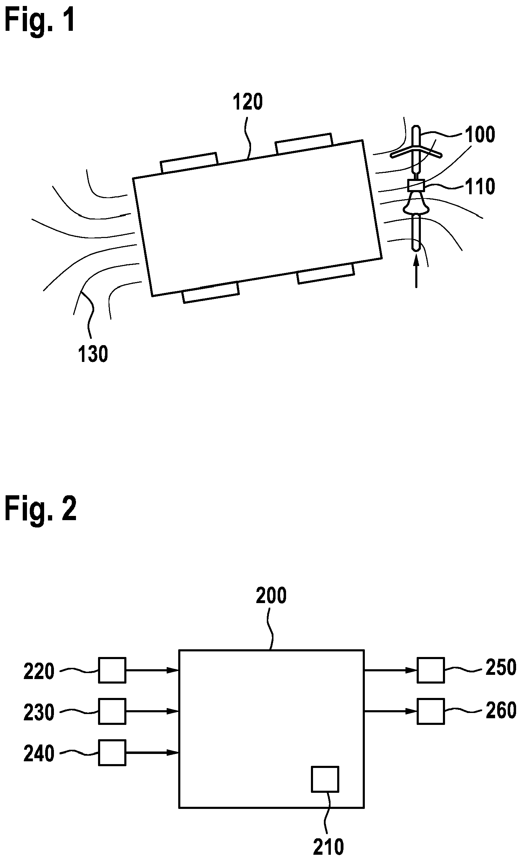

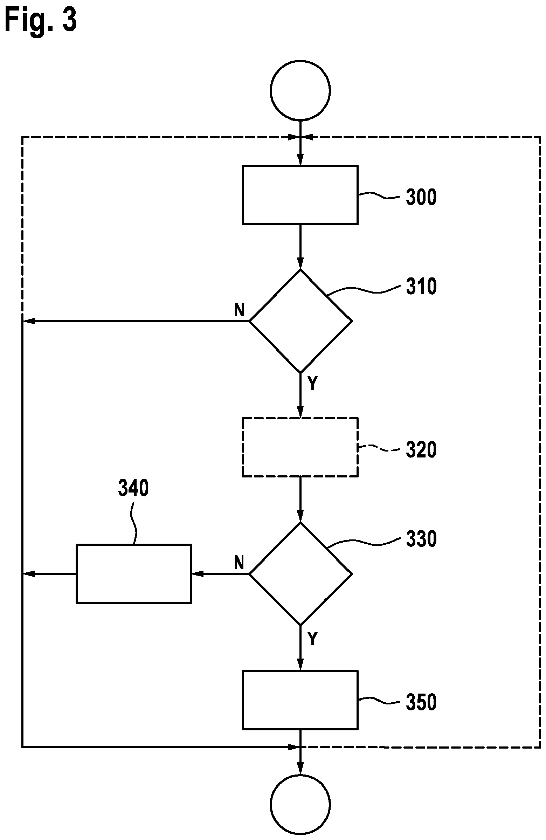

Figur 1 zeigt eine für die vorliegende Erfindung maßgebliche Verkehrssituation unmittelbar vor einem Unfall. In der Figur 2 ist eine erfindungsgemäße Vorrichtung und in Figur 3 ein erfindungsgemäßes Verfahren dargestellt.

### Ausführungsformen der Erfindung

Kommt es im Straßenverkehr zu einer Kollision eines Kraftfahrzeugs 120 mit einem Zweirad 100 so trägt in den meisten Fällen der Zweiradfahrer erhebliche Verletzungen davon. Ein derartiger Unfall kann mit der nachstehende zu beschreibenden Erfindung erkannt werden, so dass in Abhängigkeit der Beteiligung eines Kraftfahrzeugs schneller Hilfe zur Versorgung des Zweiradfahrers gerufen werden kann. Wesentlich für das erfindungsgemäße Verfahren ist dabei, dass an dem Zweirad 100 ein Magnetfeldsensor 100 angebracht ist, der das durch das Kraftfahrzeug 120 erzeugte oder im Umfeld des Zweirad beeinflusste Magnetfeld 130 erfasst. Statt der Anwendung der Erfindung bei einem Zweirad kann das Verfahren oder eine entsprechende Vorrichtung mit einem Magnetfeldsensor bei jedem Verkehrsteilnehmer verwendet werden. So können Fußgänger die Vorrichtung mit einem Magnetfeldsensor an der Kleidung oder im Rucksack mit sich tragen. Ebenso können Skateboardfahrer oder Inline-Fahrer entsprechende Vorrichtungen mit sich herum tragen. Auch die Anwendung in Kraftfahrzeugen ist denkbar. In diesem Fall kann das durch ein anderes Fahrzeug im Umfeld des eigenen Fahrzeugs geänderten Magnetfelds als Maß für die Annäherung herangezogen werden.

Anhand des Blockschaltbilds in Figur 2 soll schematisch eine erfindungsgemäße Vorrichtung dargestellt werden, mittels der eine Klassifizierung einer Unfallsituation in Abhängigkeit von wenigstens einer ersten Sensorgröße und einer Magnetfeldsensorgröße ermöglicht werden kann. Hierzu ist eine Verarbeitungseinheit, z.B. ein Steuergerät 200 vorgesehen, welcher optional einen Speicher 210 aufweisen kann. Das Steuergerät 200 erfasst die ersten Sensorgrößen eines ersten Sensors 200. Hierbei kann es sich beispielsweise um einen Beschleunigungssensor handelt. Denkbar ist jedoch auch, dass der erste Sensor 200 ein Drehratensensor darstellt, so dass das Steuergerät eine Drehratengröße erfasst. Das Steuergerät 200 weist dabei die Fähigkeit auf, basierend auf wenigstens den ersten Sensorgrößen eine Unfallsituation zu erkennen, beispielsweise indem die Veränderung des Absolutwerts oder die Veränderung als solches einen kritischen Wert übersteigt. Optional kann auch vorgesehen sein, dass das Steuergerät 200 mehrere Sensorgrößen erfasst, um daraus die Unfallsituation abzuleiten. So ist denkbar, dass eine zweite Sensorgröße mittels eines Neigungssensors 240 erfasst wird, die ein seitliches Umkippen des Zweirads anzeigt. Es ist jedoch auch denkbar, mittels der zweiten Sensorgröße und eines Kraftsensors eine auf ein Fahrzeug wirkende Kraft zu erfassen. Dies könnte beispielsweise einen Auffahrunfall anzeigen. Nachdem eine Unfallsituation erkannt worden ist, kann das Steuergerät 200 weiter erkennen, ob der erkannte Unfall einen erheblichen Schaden beim Nutzer der Vorrichtung, z.B. einem Zweiradfahrer, einem Fahrzeugführer oder einem Fußgänger, hervorgerufen hat. In diesem Fall wäre es möglich, dass das Steuergerät 200 einen Hilferuf mit einem Notrufsender 250 absendet, der entsprechende Hilfe herbeiruft. Entsprechende Notrufsender sind beispielsweise als eCalls bekannt. Um zu entscheiden, ob die Unfallsituation einen derartigen Notruf erfordert, erfasst das Steuergerät 200 das Magnetfeldsensorsignal eines Magnetfeldsensors 230. Mit Hilfe dieses Magnetfeldsensorsignals bzw. deren zeitlichen Veränderung kann erkannt werden, ob sich zum Unfallzeitpunkt ein Objekt, z.B. ein Fahrzeug genähert oder sogar am Unfall beteiligt war. Dabei muss es sich bei dem sich annähernden Objekt nicht zwangsläufig um ein eigenständig magnetisches Objekt handeln. So kann auch ein metallisches Objekt das magnetische Umfeld um die Vorrichtung bzw. den Magnetfeldsensor 230 derart ändern, dass die Schlussfolgerung der Einflussnahme auf den Verkehrsteilnehmer abgeleitet werden kann. Hierzu ist es insbesondere sinnvoll, den Magnetfeldsensor 230 an einem zentralen Ort des zu überwachenden Fahrzeugs, z.B. des Zweirads oder des Verkehrsteilnehmers zu befestigen.

Optional kann auch vorgesehen sein, dass das Steuergerät 200 bei Erkennung einer Unfallsituation mit einer Annäherung eines das Magnetfeld ändernden Objekt Maßnahmen einleitet, die den Unfall abmildert, entgegenwirkt oder den Nutzer nach dem Unfall hilft. So ist denkbar, dass bei einer prognostizierten Unfallsituation ein entsprechendes System 260 angesteuert wird, welches einen Airbag aktiviert, der den Aufprall mindert oder eine Lenkung aktiviert, die das Fahrzeug von der Unfallstelle weglenkt. Weiterhin ist auch denkbar, dass das System 260 den Verkehrsteilnehmer wenigstens teilweise fixiert, um weiteren Schaden zu verhindern.

Das erfindungsgemäße Verfahren, welches im Steuergerät 200 abläuft, wird anhand des Flussdiagramms in Figur 3 weiter ausgeführt. Nach dem Start des Verfahrens wird im Schritt 300 wenigstens eine erste Sensorgröße des ersten Sensors 220 erfasst. Hierbei kann es sich wie bereits erwähnt, um eine Beschleunigungsgröße handeln. Um die Auswertbarkeit der ersten Sensorgröße bzw. die Ableitung der Unfallsituation zu verbessern, kann optional vorgesehen sein, dass die Komponenten der erstes Sensorgröße in wenigstens zwei Raumrichtungen separat erfasst und ausgewertet werden. So kann eine seitliche Beschleunigung, beispielsweise durch einen Auffahrunfall, von einer resultierenden Beschleunigung in Fahrtrichtung unterschieden werden. Optional kann im Schritt 300 auch eine zweite (oder dritte, vierte) Sensorgröße erfasst werden, um die Ableitung der Unfallsituation zu verbessern. Im nachfolgenden Schritt 310 wird geprüft, ob aufgrund der vorliegenden Sensorgrößen eine Unfallsituation erkannt wird. Ist das nicht der Fall, wird das Verfahren beendet oder erneut mit Schritt 300 durchlaufen. Wird jedoch eine Unfallsituation erkannt, wird in den nachfolgenden Schritten eine Klassifizierung des Unfalls durchgeführt. Hierzu werden im nächsten Schritt 320 Magnetfeldsensorgrößen eines Magnetfeldsensors 230 erfasst. Optional kann jedoch auch vorgesehen sein, dass die Magnetfeldsensorgrößen bereits im Schritt 300 erfasst werden. Nachfolgend wird im Schritt 330 geprüft, ob in Abhängigkeit des insbesondere zeitlichen Verlaufs der Magnetfeldsensorgrößen eine kritische Unfallsituation erkannt wird, bei dem ein anderes Objekt, z.B. ein Fahrzeug, beteiligt war. Ist das nicht der Fall, so wird im Schritt 340 festgestellt, dass der Unfall ohne Kollisionspartner erfolgt ist. In Abhängigkeit dieses Schrittes können ebenfalls Maßnahmen eingeleitet werden, die den Nutzer des Verfahrens helfen können, Hilfe herbei zu rufen. So kann beispielsweise mit einem Beschleunigungssensor und einem Neigungssensor erkannt werden, dass das Fahrrad sich um 180° dreht, ohne dass ein Objekt in der Nähe mittels des Magnetfeldsensors erkannt wird. In diesem Fall könnte das Verfahren eine Reparatursituation des Fahrrads erkennen, bei dem das Fahrrad auf den Lenker und den Sattel gestellt wird. Da in diesem Fall kein Notruf notwendig ist, unterbleibt ein Notruf. Das Verfahren wird daher nach dem Schritt 340 oder optional unmittelbar nach dem Schritt 300 beendet oder neu gestartet.

Wird jedoch im Schritt 330 erkannt, dass ein Objekt kurz vor oder während der Unfallsituation in der Nähe des Nutzers des Verfahrens das Magnetfeld der Umgebung verändert hat, liegt es nahe, dass die Unfallsituation zu einer Verletzung geführt hat. In diesem Fall wird im nachfolgenden Schritt 350 ein Notruf abgesetzt, der eine Hilfe für den Nutzer herbeiruft.

Optional kann auch vorgesehen sein, dass weitere Sensorgrößen erfasst werden, die die Unfallsituation oder die Klassifizierung, insbesondere die Erkennung einer kritischen Unfallsituation für den Nutzer bzw. den Verkehrsteilnehmer weiter spezifizieren oder verifizieren. Neben den erwähnten Kraftgrößen, die eine äußere Kraft auf den Verkehrsteilnehmer bzw. das Fahrzeug implizieren, kann auch ein Mikrophon verwendet werden, welches typische Kollisionsgeräusche oder Schmerzensschreie aufnimmt.

Weiterhin ist möglich, dass auch die Magnetfeldsensorgrößen in wenigstens zwei unterschiedlichen Raumrichtungen erfasst werden. Hierdurch kann eine Annäherung des Objekt deutlicher erkannt werden.

Die Erkennung der kritischen Unfallsituation kann sowohl über die Betrachtung des Absolutwerts der Magnetfeldsensorgröße erfolgen als auch über deren Änderungsgeschwindigkeit. So ist eine schnelle Veränderung des Magnetfelds in der Umgebung des Verkehrsteilnehmers, bzw. des Magnetfeldsensors, ein Indiz für eine schnelle und gefährliche Kollision.

## Patentansprüche

1. Verfahren zur Erzeugung einer Klassifizierungsinformation einer Unfallsituation, wobei
• mittels eines ersten Sensors (220) wenigstens eine erste Sensorgröße erfasst wird (300) und
• in Abhängigkeit der wenigstens ersten Sensorgröße eine Unfallsituation erkannt wird (310),
**dadurch gekennzeichnet dass**
• mittels eines Magnetfeldsensors (110, 230) wenigstens eine Magnetfeldsensorgröße erfasst wird (300, 320) und
• in Abhängigkeit der erkannten Unfallsituation und der wenigstens einen Magnetfeldsensorgröße eine Klassifizierungsinformation erzeugt wird (330), die eine von wenigstens zwei Unfallsituationen repräsentiert.

2. Verfahren nach Anspruch 1, **dadurch gekennzeichnet dass** in Abhängigkeit der Klassifizierungsinformation
• ein Notruf erzeugt wird (350), wenn eine erste Unfallsituation erkannt wird, und
• kein Notruf erzeugt wird, wenn eine zweite Unfallsituation erkannt wird,
wobei insbesondere vorgesehen ist, dass die erste Unfallsituation bei einer Änderung der Magnetfeldsensorgröße erkannt wird, bei der die Änderung der Magnetfeldsensorgröße in wenigstens einer Raumrichtung oberhalb eines vorgegebenen Schwellenwert liegt.

3. Verfahren nach Anspruch 1 oder 2, **dadurch gekennzeichnet dass** zusätzlich
• mittels eines zweiten Sensors (240) wenigstens eine zweite Sensorgröße erfasst wird (300), und
• in Abhängigkeit der wenigstens zweiten Sensorgröße die Unfallsituation erkannt und/oder die Klassifizierungsinformation erzeugt wird.

4. Verfahren nach einem der vorhergehenden Ansprüche, **dadurch**
**gekennzeichnet dass**
• als erste Sensorgröße eine Beschleunigungsgröße eines Beschleunigungssensors (220) erfasst wird, insbesondere eine Beschleunigungsgröße in wenigstens zwei Raumrichtungen, und/oder
• als zweite Sensorgröße eine Neigungsgröße eines Neigungssensors (240) erfasst wird, insbesondere eine Neigungsgröße in wenigstens zwei Raumrichtungen.

5. Verfahren nach einem der vorhergehenden Ansprüche, **dadurch**
**gekennzeichnet dass** zur Erkennung der Unfallsituation und/oder der Erzeugung der Klassifizierungsinformation der Gradient der ersten Sensorgröße, der zweiten Sensorgröße und/oder der Magnetfeldsensorgröße verwendet wird.

6. Vorrichtung zur Erzeugung einer Klassifizierungsinformation einer Unfallsituation, insbesondere zur Durchführung eines Verfahrens nach einem der Ansprüche 1 bis 5, wobei die Vorrichtung ein Klassifizierungsmittel (200) aufweist, welches
• wenigstens eine erste Sensorgröße eines ersten Sensors (220) erfasst und
• in Abhängigkeit der wenigstens ersten Sensorgröße eine Unfallsituation erkennt,
**dadurch gekennzeichnet dass** das Klassifizierungsmittel (200)
• wenigstens eine Magnetfeldsensorgröße mittels eines Magnetfeldsensors (110, 230) erfasst und
• in Abhängigkeit der erkannten Unfallsituation und der wenigstens einen Magnetfeldsensorgröße eine Klassifizierungsinformation erzeugt, die eine von wenigstens zwei Unfallsituationen repräsentiert.

7. Vorrichtung nach Anspruch 6, **dadurch gekennzeichnet dass** das Klassifizierungsmittel (200) in Abhängigkeit der Klassifizierungsinformation
• ein Notrufmittel (250) zur Erzeugung eines Notrufs ansteuert, wenn eine erste Unfallsituation erkannt wird, und
• das Notrufmittel (250) nicht ansteuert, wenn eine zweite Unfallsituation erkannt wird,
wobei insbesondere vorgesehen ist, dass das Klassifizierungsmittel (200) die erste Unfallsituation bei einer Änderung der Magnetfeldsensorgröße erkennt, bei der die Änderung der Magnetfeldsensorgröße in wenigstens einer Raumrichtung oberhalb eines vorgegebenen Schwellenwert liegt.

8. Vorrichtung nach Anspruch 6 oder 7, **dadurch gekennzeichnet dass** das Klassifizierungsmittel (200) zusätzlich
• wenigstens eine zweite Sensorgröße mittels eines zweiten Sensors erfasst, und
• in Abhängigkeit der wenigstens zweiten Sensorgröße die Unfallsituation erkennt und/oder die Klassifizierungsinformation erzeugt.

9. Verfahren nach einem der vorhergehenden Ansprüche, **dadurch gekennzeichnet dass** das Klassifizierungsmittel (200)
• als erste Sensorgröße eine Beschleunigungsgröße eines Beschleunigungssensors erfasst, insbesondere eine Beschleunigungsgröße in wenigstens zwei Raumrichtungen, und/oder
• als zweite Sensorgröße eine Neigungsgröße eines Neigungssensors erfasst, insbesondere eine Neigungsgröße in wenigstens zwei Raumrichtungen.

10. Zweirad, insbesondere ein Fahrrad, mit
• einer Vorrichtung nach einem der Ansprüche 6 bis 9, und
• einem ersten Sensor (220) zur Erfassung einer ersten Sensorgröße zur Ableitung eines Unfallsituation, und
• einem Magnetfeldsensor (110, 230) zur Erfassung einer Magnetfeldsensorgröße,
wobei die Vorrichtung in Abhängigkeit der erkannten Unfallsituation und der wenigstens einen Magnetfeldsensorgröße eine Klassifizierungsinformation erzeugt, die eine von wenigstens zwei Unfallsituationen repräsentiert.

11. Zweirad nach Anspruch 10, **dadurch gekennzeichnet dass** das Fahrrad ein Notrufmittel (250) zur Erzeugung eines Notrufs aufweist, welches durch die Vorrichtung in Abhängigkeit von einer der erzeugten Klassifizierungsinformationen angesteuert wird.
